## Europäisches Patentamt
## European Patent Office
## Office européen des brevets

(19)

(11) Publication number: **0 009 281**
**B1**

(12)

# EUROPEAN PATENT SPECIFICATION

(45) Date of publication of patent specification: **04.11.81**

(21) Application number: **79200501.9**

(22) Date of filing: **10.09.79**

(51) Int. Cl.³: **F 16 L 55/10, F 17 D 3/08, C 08 L 91/00**

(54) Pipeline gel plug.

(30) Priority: **18.09.78 US 943012**

(43) Date of publication of application:
**02.04.80 Bulletin 80/7**

(45) Publication of the grant of the European patent:
**04.11.81 Bulletin 81/44**

(84) Designated Contracting States:
**FR GB NL**

(56) References cited:
DE - A1 - 2 720 722
DE - B - 1 295 932
DE - C3 - 2 303 698
US - A - 3 225 787
US - A - 3 676 091

(73) Proprietor: SHELL INTERNATIONALE RESEARCH MAATSCHAPPIJ B.V.
Carel van Bylandtlaan 30
NL-2596 HR DEN HAAG (NL)

(72) Inventor: Kruka, Vitold Raimond
12714 Cobblestone
Houston, Texas 77024 (US)
Inventor: Esparza, Joe Oscar
21435 Park Green
Katy, Texas 77450 (US)

(74) Representative: Keuzenkamp, Abraham et al,
c/o Shell Internationale Research Maatschappij
B.V. P.O. Box 302
NL-2501 CH 's-Gravenhage (NL)

Courier Press, Leamington Spa, England.

## Pipeline gel plug

Pipelines are long, hollow, flexible tubes of metal. When one end of a long pipeline lying horizontally on a flat surface is raised vertically, the pipe bends due to the weight of the unsupported segment. The maximum bending stress occurs in the bend near or at the horizontal surface. This bend is commonly referred to as the sagbend. As the end of the pipe is raised higher, the bending stress increases in the sagbend. Depending partially upon the pipe diameter, the wall thickness, the tensile strength of the metal and the external pressure on the pipe, the pipe will collapse when the compressive and tensile forces developed along the bend exceed the physical strength of the metal walls. The collapse may result in tearing and otherwise rupturing the pipe wall. When this occurs under water, as in a submarine pipelaying operation, it is known as a wet buckle. The free end of an anchored horizontal pipe can be raised higher before collapse occurs, if the pipe is stretched; e.g., kept under tension. Loss of the ability to keep the pipe under tension, due possibly to the failure of a barge anchor to hold, may result in a wet buckle of the pipe. The high velocity water which enters through the rupture may fill a significant portion of the pipe before corrective action can be taken, Further the water introduces undesirable and difficult to remove silt, sand and stones into the line. Before laying can be resumed, the pipe is commonly blown clear of water so that the ruptured end can be picked up. Wet buckles thus can result in substantial delays.

Lines can also be ruptured or punctured by foreign objects away from the sagbend. Anchors of ships are an example of such foreign objects. Water rushing in through the puncture will reach the sagbend and begin to fill the vertical portion of the pipe. The additional unsupported weight will in turn lead to a wet buckle at the sagbend.

One method of burying a pipe lying at the bottom of water is to remove the soil beneath the pipe with high-velocity water jets which suspend the soil particles in a wall-soil slurry so that the pipe sinks into the suspended soil. An air-filled pipe, because of its light weight in the water, will not readily sink into the suspension. While water filling the pipe prior to trenching can reduce the time, effort, and expense of burying the pipe, the water may also lead to wet buckles as above noted.

A weight coating such as concrete may be applied to large-diameter pipe to cause it to sink in water. The weight handling ability of the pipe laying equipment and economic reasons normally limit the quantity of coating close to the minimum necessary to cause the pipe to be negatively buoyant in water. The air-filled pipe lying on the bottom of the water body then is near the density of the water and thus easily moved about by flow currents which can shed vortices behind the pipe. These vortices, if at one of the natural frequencies of the pipe, may induce vibratory motion in the pipe with resulting stresses spalling the concrete off the pipe, creating a buoyant pipe. Thus, it is desirable to water-fill the pipe, yet somehow avoid the above-noted problems with wet buckles.

The present invention not only provides a solution to the above problems, but also includes other improvements as more particularly described hereinafter.

A primary purpose of the present invention is to provide a gel plug for use in a pipeline during laying of an offshore pipeline from a pipelay vessel or for sealing the ends of a towable pipe section. The composition of the gel plug according to the invention comprises a vegetable oil, a fatty acid and a particulate filler. Tall oil or soya oil are suitable vegetable oils. Stearic acid is a suitable fatty acid. The filler is a particulate such as coal dust, calcium carbonate, and gypsum. A base of a polymer may be optionally added to the composition. A suitable polymer is for example polybutene.

When the gel plug is used during the laying of an offshore pipeline the plug will separate a water-filled segment of the pipeline from an ambient air-filled segment, and thus allow water fill weighting of a completed segment to a predetermined distance from an operating pipelay vessel.

The gel plug of the present invention is designed so that: (1) it can be pumped at low velocities in a large-diameter underwater pipe at a predetermined pressure, and upon cessation of pumping stops to withstand the hydrostatic force exerted by a relatively high column of water; (2) it can be pumped for many miles without losing this ability: (3) it is not contaminated by existing coatings on the pipe wall or by sea water and debris which may enter the pipe during construction, and (4) after stagnation time of up to one year or longer, it is movable by the previously predetermined pressure.

Such a movable gel plug, as above described, may be inserted into an underwater pipeline at the shore end and followed by pressurized water which pushes the plug into the desired position. This part of the pipeline then sinks due to increased weight. When the unfinished end of the pipeline is temporarily abandoned (due to weather conditions, et cetera), air is sealed into the unfinished but capped end. The shore end is further pressurized to reduce the volume of air, causing the pipeline to sink. To retrieve the unfinished end, the pressure is merely reduced.

The gel plug may also be used in a segment of pipe to temporarily prevent sea water from flooding the pipe when it is towed empty to the job site. Pipelines are sometimes constructed by joining long segments of pipe, made up on land, and then towed or dragged to the installation points for joining into the pipeline. In these operations, it is desirable to reduce the weight of the segments by the buoyancy of the airfilled pipe. Gel plugs are placed at each end of such segments to prevent water filling during pipe tow.

The primary constituents of the gel plug of this invention are vegetable oil, fatty acid, a filler, an optional base, and an optional polymer. Gel plug properties may be adjusted within limits, by the appropriate concentration and type of these constituents. The requirements of a gel plug for a submarine pipeline are unique and differ from requirements for such things as drilling fluids mudpacks, product separators, and line scrapers which, in fact, are not comparable to the present invention. The movable gel plug is a Bingham plastic fluid having a high yield strength, high viscosity, and low gel strength. The yield strength is independent of shear stress, shear rate, total work input, and time. Plastic fluids were defined by Bingham as fluids having a yield strength that must be exceeded in order to initiate flow. More importantly for the movable gel plug, the flow stops when the force applied is less than the force required to overcome the yield strength. Bingham plastics exhibiting thixotropic properties (e.g., their flow properties may be time-dependent) are undesirable for use with the present invention. When a thixotropic fluid is allowed to stand quiescent, a gel structure is built up. When stress is applied, the gel structure breaks when the gel structure and decreases the flow resistance.

A thixotropic plastic, at low pressures, usually flows as a plug lubricated by a thin film of highly sheared liquid at the pipe wall when the applied force is greater than the resistance force due to the yield strength. Accordingly, non-thixotropic Bingham plastic is the best type of fluid for the movable gel plug. Inasmuch as the yield value of a plastic fluid can depend on friction between particles, specific surface area, and interparticle attractive forces, the gel plug of the present invention also contains a high concentration of small, solid particles.

The adhesive bond between the gel plug and pipewall must require more force to break than the force required to overcome the yield strength. Otherwise the force required to move the plug would be equal to the force required to overcome the adhesive bond and not the yield strength. Also, the gel plug of this invention has the ability to adhere to the pipe wall if it is oil-wet, water-wet, or coated with paints or dirt. Because of this requirement, the gel plug employs polar, aromatic, acidic, unsaturated and adhesive polymer materials.

If, for example, the maximum pipeline depth below mean sea level is 161.5 m and the height of an onshore water injection pump is 15 m above mean seal level, then the maximum hydrostatic head to which a gel plug therein, followed by water, can be exposes is 176.5 m. Conservatively assuming that the line is filled with treated 3.5% saline sea water at 4°C, then the 176.5 m head corresponds to a hydrostatic pressure of about $17.6 \times 10^5$ Pa (18 kg/cm²). Such a plug must, at a minimum, be able to withstand this pressure without movement. Higher yield pressures (initiation of motion), however, are desirable in view of incursion of foreign water in to the gel plug leading to decreased plug yield strength, For water-immiscible plugs, the foreign water is transported throught the centre of the plug and deposited at the front end. Continued plug movement pushes the water ahead without intermingling of the two phases. During the time that water is within the gel plug, the plug as a whole exhibits lower yield strength and viscosity. Sources for the incursion consist of water slippage past water/gel plug separators and line breaks in the leading part of the plug. The separators of the present invention do not pass water during normal operations but may do so when moving over obstacles left within the pipe. Accidental line breaks in the leading part of the plug, where internal pressure is less than local sea hydrostatic pressure, similarly allow water incursion. Line breaks at the trailing part of the plug will lead to gel discharge into the sea. In addition to the above accidental gel loss, there is some continuous loss past the separators as the plug moves down the line.

Considering the above parameters, it is preferred, as mentioned, that the gel materials behave as Bingham plastics or shear thinning Bingham plastics, and that the gel plug yield strength be over designed by in some cases a factor of about two. The yield pressure may then be twice the maximum hydrostatic pressure. Another requirement for the plug is that it be able, at a minimum, to move at the maximum pipelaying rate, and do so at acceptable pressures. For example, If the maximum design velocity is 6 cm/sec. or about 5.2 km per day, and the pressure limit is approximately $150 \times 10^5$ Pa (154 kg/cm²) and design line discharge pressures range from ($75.5 \times 10^5$ Pa to $96 \times 10^5$ Pa (77 to 98 kg/cm², then it is desirable that the plug move at 6 cm/sec. when subjected to about $68.6 \times 10^5$ Pa (70 kg/cm²). Short plugs are undesirable because: (1) the consequent high yield gel is difficult to prepare and handle; (2) more rapid depletion of short plugs assuming quantity of gel material left behind by water/gel separators is independent of yield strength; and (3) reduction in yield and viscosity is more severe in short plugs for a fixed quantity of water incursion. Long plugs, on the other hand, also have drawbacks; for example: (1) the attendant low yield strength is more likely to allow water seepage past water/gel separators; (2) cost is approximately proportional to length; and (3) gel plug disposal problems are proportional to length. The present invention strikes a compromise between the above-listed criteria for determining length.

Velocity is approximately proportional to pressure drop and inversely proportional to plastic viscosity. The pressure drop to sustain a given viscosity is controlled by the choice of viscosity. A high viscosity, resulting in a high pressure drop, yields a thick boundary layer along the pipe wall. The gel material beyond the boundary layer moves as a solid core. A thick secondary layer provides a good mixing and renewal of the gel layer immediately adjacent to the wall, faster than is the case with a thin boundary layer. Contamination of the wall layer by foreign substances (rust, debris, oil, water) and reduction in its effectiveness are also less severe with thick boundary layers. Water fingers along the plug and pipewall result in a thin annulus in the case of high yield but low viscosity materials. For high viscosity materials, the water is transported along the solid core resulting in a lower reduction in plug effectiveness. Further, high-viscosity plugs require very high pressures for rapid motion and such pressures may not be available. Also, high viscosity plugs have an inherent safety factor against equipment failure or unforeseen gel failure as they provide a longer reaction time for correction. In summary, high viscosity gel materials are desirable in the present invention because of: (1) more rapid renewal of contaminated wall layers; (2) reduced likelihood of water fingering along the pipe wall, resulting in total or partial plug failure; and (3) increased reaction time for correcting system failures or malfunctions.

Gel plug disposal methods depend on the plug constituents and environmental requirements. It is highly likely that plugs of low toxicity such as the present composition can be discharged into the sea. If the solid filler is calcium carbonate, resulting in a plug specific gravity of approximately 2.0, the plug will remain stable on the sea floor for eventual biological degradation. If disposal at sea is deemed unacceptable for any reason, then the plug material can either be barged to shore for eventual disposal or can possibly be cleaned and disposed as oil base drilling muds are.

Considering the above requirements for the gel plug, it has been found that systems comprised of vegetable oil, fatty acid, particulate filler, and possibly a base and polymer are suitable for this application. Combinations of these compounds allow for the selection and control of desirable gel plug properties. For instance, yield strength is increased by addition of fatty acid plus base or fatty acid plus base plus filler. Plastic viscosity can be increased by addition of oil-soluble polymers. The plug can be made water-immiscible or water non-wettable by addition of saturation animal fatty acids plus base. Steel wettability can be induced by selected oils and polymers. Vegetable oils suitable for use in the invention are soya oil, tall oil, sunflower oil, coconut oil, cottonseed oil, and corn oil. Preferred are soya oil and tall oil.

In further compliance with the above-described requirements, suitable fatty acids are distilled soya fatty acids, capric, lauric, myristic, palmitic, stearic acid, and mixtures thereof. Stearic acid is preferred.

To get more viscosity, a polymer such as a low molecular weight (MWX 100) polybutene may be used.

Suitable optional bases for use with the invention include sodium hydroxide, potassium hydroxide and ammonia. Sodium hydroxide is preferred.

Also used with the fatty acid and the vegetable oil for reasons as above described is a filler such as calcium carbonate, coal dust, gypsum or the like.

Based on the complete mixed composition, the vegetable oil comprises from about 5 to about 30 weight per cent, the fatty acid from about 1 to about 10 weight per cent, and the filler from about 50 to about 80 weight per cent; if used, the base comprises from about 0.01 to about 1 weight per cent and the polymer comprises from about 1 to about 20 weight per cent. Mixing of these ingredients preferably takes place according to the following procedure: non-reacting liquid phases are blended at room temperature. These consist of vegetable oil and polymer. The mixture is heated to the melting point of the fatty acid (stearic acid MP = 69.6°C) and the fatty acid is added to it. The base is added to the filler in an approximately uniform fashion. The filler and base are then added to the blended vegetable oil, polymer, and fatty acid. The resulting mixture is stirred and then allowed to cure for approximately one day.

### EXAMPLES

The following Table lists several compositions and properties at approximately 24°C.

| Composition | Gel strength Pa (dynes/cm²) | Yield strength Pa (dynes/cm²) | Viscosity Pa.s (poise) | Steel wetting | Water displace-ment (1) |
|---|---|---|---|---|---|
| 11% soya oil<br>11% polybutene | 200 (2000) | 200 (2000) | 80 (800) | yes | yes |
| 2% soya fatty acid (2)<br>75% calcium carbonate<br>0.02% sodium hydroxide | | | | | |
| 20% polybutene<br>5% soya fatty acid (2)<br>75% calcium carbonate<br>0.05% sodium hydroxide | 300 (3000) | 300 (3000) | 85 (850) | yes | yes |
| 20% soya oil<br>25% stearic acid<br>79% calcium carbonate<br>1% sodium hydroxide | 1000 (10000) | 950 (9500) | 160 (1600) | yes | yes |

(1)  Gel displaces water from water wet steel.

(2)  Contains soya oil plus various fatty acids including stearic acid.

## Claims

1. A composition for a gel plug utilized for laying an offshore pipeline from a pipelay vessel or for sealing the ends of a towable pipe section comprising a vegetable oil, a fatty acid, and a particulate filler.

2. The composition as claimed in claim 1, characterized in that the vegetable oil is tall oil or soya oil.

3. The composition as claimed in claim 1 or 2, characterized in that the fatty acid is or includes stearic acid.

4. The composition as claimed in any one of the claims 1 to 3, characterized in that a base is added thereto.

5. The composition as claimed in claim 4, characterized in that the base is sodium hydroxide.

6. The composition as claimed in any one of the claims 1 to 5, characterized in that a polymer is added thereto.

7. The composition as claimed in claim 6, characterized in that the polymer is polybutene.

8. The composition as claimed in any one of the claims 1 to 7, characterized in that the filler is calcium carbonate.

## Revendications

1. Une composition pour un bouchon colloidal, utilisé pour poser un pipeline en mer à partir d'un navire poseur de conduites ou pour obturer les extrémités d'un tronçon de conduite remorquable, comprenant une huile végétale, un acide gras et une charge particulaire.

2. La composition telle que revendiquée dans la revendication 1, caractérisée en ce que l'huile végétale est du tall-oil ou de l'huile de soja.

3. La composition telle que revendiquée dans la revendication 1 ou 2, caractérisée en ce que l'acide gras est de l'acide stéarique ou contient de l'acide stéarique.

4. La composition telle que revendiquée dans l'une quelconque des revendications 1 à 3, caractérisée en ce qu'une base y est ajoutée.

5. La composition telle que revendiquée dans la revendication 4, caractérisée en ce que la base est de l'hydroxyde de sodium.

6. La composition telle que revendiquée dans l'une quelconque des revendications 1 à 5, caractérisée en ce qu'un polymère y est ajouté.

7. La composition telle que revendiquée dans la revendication 6, caractérisée en ce que le polymère est du polybutène.

8. La composition telle que revendiquée dans l'une quelconque des revendications 1 à 7, caractérisée en ce que la charge est du carbonate de calcium.

**Patentansprüche**

1. Masse für einen Gelstopfen zur Anwendung bei der Rohrverlegung von Offshore-Pipelines von einem Rohrverlegeschiff aus oder für die Abdichtung der Enden schleppbarer Rohrabschnitte, gekennzeichnet durch einen Gehalt an einem Pflanzenöl, einer Fettsäure und einem feinen Füllstoff.

2. Masse nach Anspruch 1, dadurch gekennzeichnet, dass das Pflanzenöl Tallöl oder Sojaöl ist.

3. Masse nach Anspruch 1 oder 2, dadurch gekennzeichnet, dass die Fettsäure Stearinsäure ist oder diese enthält.

4. Masse nach Anspruch 1 bis 3, dadurch gekenzeichnet dass die Masse zusätzlich ein Lauge enthält.

5. Masse nach Anspruch 4, dadurch gekennzeichnet, dass die Lauge Natronlauge ist.

6. Masse nach Anspruch 1 bis 5, dadurch gekennzeichnet, das die Masse zusätzlich ein Polymer enthält.

7. Masse nach Anspruch 6, dadurch gekennzeichnet, dass das Polymer Polybuten ist.

8. Masse nach Anspruch 1 bis 7, dadurch gekennzeichnet, dass der Füllstoff Calciumcarbonat ist.